(19) Europäisches Patentamt
European Patent Office
Office européen des brevets

(11) **EP 4 465 532 A1**

(12) **EUROPEAN PATENT APPLICATION**

(43) Date of publication:
**20.11.2024 Bulletin 2024/47**

(21) Application number: **23305776.9**

(22) Date of filing: **16.05.2023**

(51) International Patent Classification (IPC):
*H02S 50/00* (2014.01)    *H02S 50/10* (2014.01)

(52) Cooperative Patent Classification (CPC):
**H02S 50/00; H02S 50/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOTALENERGIES ONETECH
92400 Courbevoie (FR)**

(72) Inventors:
• **GUILLEMOT, Loïc
92078 PARIS LA DEFENSE CEDEX (FR)**
• **OCHOA, Lluvia
92078 PARIS LA DEFENSE CEDEX (FR)**
• **HARDER, Nils
92078 PARIS LA DEFENSE CEDEX (FR)**

(74) Representative: **Lavoix
2, place d'Estienne d'Orves
75441 Paris Cedex 09 (FR)**

(54) **METHOD FOR DETERMINING A DEGRADATION RATE RELATIVE TO A PHOTOVOLTAIC INSTALLATION**

(57)    The present invention relates to a method for determining at least a degradation rate relative to a photovoltaic installation comprising several photovoltaic elements, the method comprising the following steps:
- collecting production data for a photovoltaic element of the photovoltaic installation, the production data comprising a plurality of production timeseries extending over different periods of time divided in days, the production timeseries being obtained through measurements,
- filtering the production data according to filtering criteria so as to obtain filtered production data corresponding to clear sky days, clear sky days being days for which the power produced is considered not to be affected by environmental conditions masking the photovoltaic element or dysfunction of the photovoltaic element, and
- determining a degradation rate for the photovoltaic element on the basis of the filtered production data.

FIG.2

**Description**

TECHNICAL FIELD OF THE INVENTION

The present invention concerns a method for determining at least a degradation rate relative to a photovoltaic installation comprising several photovoltaic elements. The invention also concerns an associated computer program product and a readable information carrier.

BACKGROUND OF THE INVENTION

Degradation or aging is a decrease in performance of a photovoltaic element (panel, module) resulting from deterioration or damage due to use and exposition to the environment. Such long-term phenomenon is difficult to quantify precisely in the field, as it is difficult to isolate individual elements in the system (individual modules) and remove the effect of other phenomena that may be present at the same time (e.g., soiling, shadowing).

The estimation of degradation rates (DR) is important as it helps asset managers understand the production expected from their assets, propose maintenance actions and verify power warranty levels of PV modules.

Traditional methods for DR calculation assume that reliable weather data (irradiance, ambient temperature) are available. With these data, methods such as year-on-year linear regression on the Performance Ratio (weather-dependent, i.e. relying on having reliable meteorological information as input) or physics-based simulations (also weather-dependent) are typically used to estimate the DR. However, these methods fail when weather data are not reliable or not sufficiently precise (e.g., from satellite or unmaintained site sensors) or do not exist.

SUMMARY OF THE INVENTION

There exists a need for a method enabling to estimate a degradation rate relative to a photovoltaic installation even when weather data are not available or not reliable.

To this end, the description relates to a method for determining at least a degradation rate relative to a photovoltaic installation comprising several photovoltaic elements, the method being implemented by a computer and comprising the following steps:

- collecting production data for a photovoltaic element of the photovoltaic installation, the production data comprising a plurality of production timeseries extending over different periods of time divided in days, the production timeseries being obtained through measurements,
- filtering the production data according to filtering criteria so as to obtain filtered production data corresponding to clear sky days, clear sky days being days for which the power produced is considered not to be affected by environmental conditions masking the photovoltaic element or dysfunction of the photovoltaic element, and
- determining a degradation rate for the photovoltaic element on the basis of the filtered production data.

The method may comprise one or more of the following features considered alone or in any combination that is technically possible:

- the photovoltaic elements are inverters or groups of inverters connected to one or a plurality of photovoltaic panels, the production timeseries being relative to the power production of the corresponding photovoltaic element;
- the filtered production data are obtained only on the basis of the collected production timeseries;
- the filtering criteria enable to evaluate the production data day by day and to keep only the production data corresponding to a production considered as being those of a clear sky day;
- the filtering criteria state that:

  - for each day, the day is kept only if it satisfies a completeness condition, the completeness condition stating that the number of useful timesteps of the day is greater than a predetermined threshold, a useful timestep for a day being a timestep whose power is above a computed power corresponding to a percentile of the power of the day, and/or
  - for each day, the day is kept only if it satisfies a production condition, the production condition stating that the power produced in the day is above a predetermined threshold, and/or
  - for each day, the day is kept only if the number of timesteps of said day satisfying a smoothness condition is above a predetermined threshold, the smoothness condition checking for a smooth evolution of the power production values;

- the smoothness condition is evaluated for each timestep of the day, either by calculating power differences for said timestep or by calculating a moving standard deviation for said timestep;
- the plurality of timeseries correspond to different years and comprise a common period of time over the different years, the common period of time being divided in subsections of time, the determination step comprising:

  - the sum of the production values corresponding to each clear sky day to obtain daily cumulative production values,
  - the sum of the daily cumulative production values corresponding to a same subsection of time to obtain aggregated production values, and
  - the comparison of the aggregated production values corresponding to common subsections of time over the different years so as to obtain the degradation rate for the photovoltaic element;

- the comparison of the aggregated production values comprises:

  - for each subsection of time satisfying a statistical criterion, the comparison of the aggregated production values corresponding to all the years of the timeseries so as to obtain a specific degradation rate for said subsection of time, and
  - the average of all the specific degradation rates to obtain the degradation rate for the photovoltaic element;

- the comparison of the aggregated production values is based on a linear regression, the specific degradation rate being the slope of the linear regression;
- the statistical criterion states that the sum of the clear sky days of the considered subsection of time is higher than a predefined threshold;
- the collecting step, the filtering step and the determination step are repeated for all the photovoltaic elements of the photovoltaic installation, and the method comprises also a step of averaging the degradation rates of all the photovoltaic elements to obtain an overall degradation rate for the photovoltaic installation;
- the collecting step also comprises collecting weather data corresponding to the collected production timeseries, the determination step comprising determining a performance ratio for each clear sky day on the basis of the production timeseries and of the weather data, the degradation rate of the photovoltaic element being obtained on the basis of the determined performance ratio, preferably by performing a linear regression, the degradation rate for the photovoltaic element being the slope of the linear regression;
- the collected data are data that have previously been processed so as to eliminate part of the collected data comprising a number of missing values above a given threshold and/or abnormal values, the abnormal values corresponding to the following values:

  - values higher than a given threshold,
  - values constant over a long period of time, and
  - values corresponding to unrealistic distributions.

The description also relates to a computer program product comprising a computer readable medium, having thereon a computer program comprising program instructions, the computer program being loadable into a data-processing unit and causing execution of a method as previously described when the computer program is run by the data-processing unit

The description also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a calculator allowing the implementation of a method for determining at least a degradation rate relative to a photovoltaic installation comprising several photovoltaic elements,
- Figure 2 is a flowchart of an example of implementation of a method for determining at least a degradation rate relative to a photovoltaic installation comprising several photovoltaic elements,
- Figure 3 is an example of a graph representing the production over a day for a clear sky day (for a fixed-tilt installation) on the left graph and a non-clear sky day on the right graph,
- Figure 4 is an example of graphs representing the aggregated production of the clear sky days of a photovoltaic element over the month of August, the left graph representing the aggregated production values for two years (2015 and 2021), the right graph representing the comparison of the aggregated production for the month of August over the different years, and

- Figure 5 is an example of graphs representing the degradation rate for a photovoltaic element (left graph) and for all the photovoltaic elements of the installation (right graph).

DETAILED DESCRIPTION OF SOME EMBODIMENTS

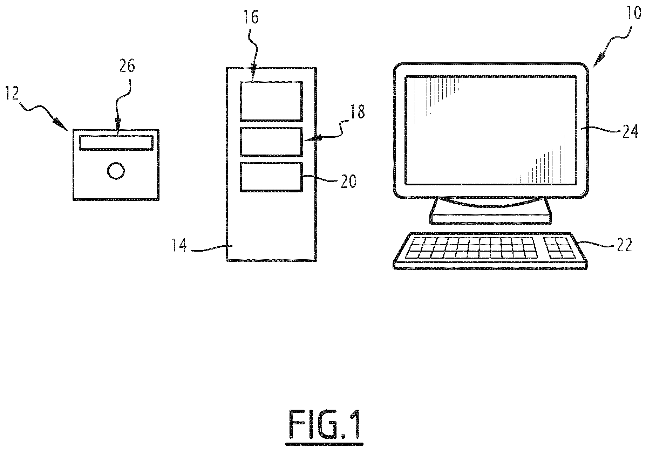

A calculator 10 and a computer program product 12 are illustrated on figure 1.

The calculator 10 is preferably a computer.

More generally, the controller 10 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 10 interacts with the computer program product 12.

As illustrated on figure 1, the calculator 10 comprises a processor 14 comprising a data processing unit 16, memories 18 and a reader 20 for information media. In the example illustrated on figure 1, the calculator 10 comprises a human machine interface 22, such as a keyboard, and a display 24.

The computer program product 12 comprises an information medium 26.

The information medium 26 is a medium readable by the calculator 10, usually by the data processing unit 16. The readable information medium 26 is a medium suitable for storing electronic instructions and capable of being coupled to a computer system bus.

By way of example, the information medium 26 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 26 is stored the computer program 12 comprising program instructions.

The computer program 12 is loadable on the data processing unit 16 and is adapted to entail the implementation of a method for determining at least a degradation rate relative to a photovoltaic installation comprising several photovoltaic elements, when the computer program 12 is loaded on the processing unit 16 of the calculator 10.

In a variant, the computer program is stored on a cloud accessible through a server. In this example, the data are thus stored on the cloud.

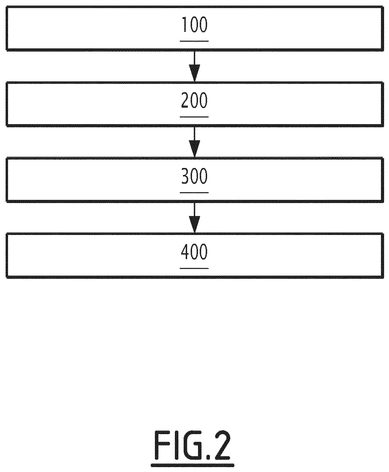

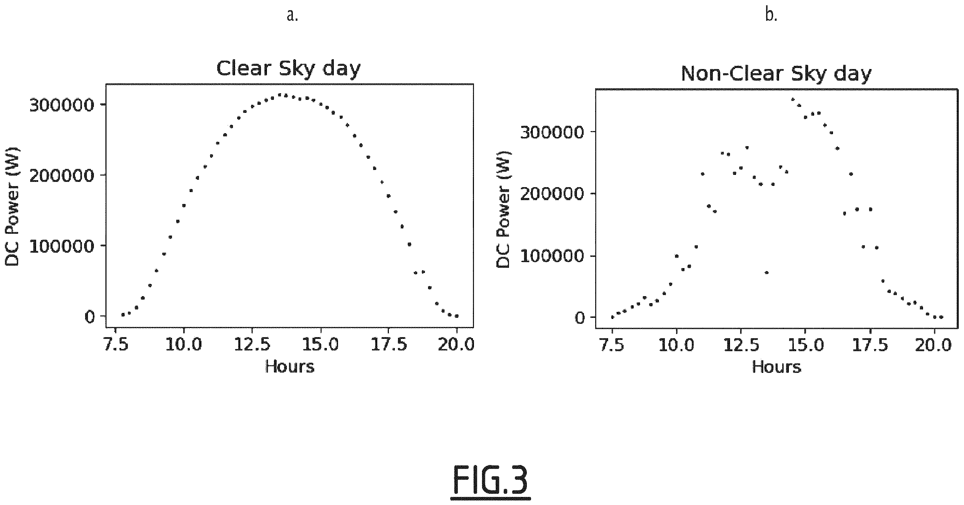

Operation of the calculator 10 will now be described with reference to figure 2, which diagrammatically illustrates an example of implementation of a method for determining at least a degradation rate relative to a photovoltaic installation comprising several photovoltaic elements, and to figures 3 to 5 which are experimental data obtained when implementing some steps of the method.

The determination method comprises a step 100 for collecting production data for a photovoltaic element of the photovoltaic installation. The collecting step 100 is implemented by the calculator 10 in interaction with the computer program product 12, that is to say is implemented by a computer.

The production data comprise a plurality of production timeseries extending over different periods of time divided in days. The duration of each production timeseries is for example one year or two years. The production timeseries are obtained through measurements performed by sensors. The frequency of acquisition of the data of each production timeseries is for example at least once a day, preferably at least one per hour, more preferably at least one every 30 minutes, more preferably at least one every 15 minutes and more preferably at least one every minute.

The plurality of timeseries corresponds to different years and comprises a common period of time over the different years, the common period of time being divided in subsections of time. The subsections of time are for example months of the year.

Preferably, the considered photovoltaic elements are inverters or groups of inverters connected to one or a plurality of photovoltaic panels. The production timeseries are relative to the power production of such photovoltaic elements.

Preferably, the collected data are data that have previously been processed so as to eliminate part of the collected data comprising a number of missing values above a given threshold and/or abnormal values.

In an example of embodiment, the missing values are determined by computing an availability rate corresponding to the monthly rate of available data. A value of 100% means the whole dataset is available otherwise a fraction of the data has not been acquired. The threshold is for example fixed to 90%.

In an example of embodiment, the abnormal values comprise the following values:

- values higher than a given threshold,
- values constant over a long period of time, and

- values corresponding to unrealistic distributions.

The values higher than a given threshold are for example values which are outside typical range, for instance negative power during daytime.

The values constant over a long period of time are values which have been frozen for multiple consecutive timesteps.

The values corresponding to unrealistic distributions are due to measurements taken by some sensors which may be wrong or not properly reported downstream, leading to unphysical distributions for some of the variables. This means all of the values reported by this device are discarded, at least for the time where it is known to have a problematic behavior.

The determination method comprises a step 200 for filtering the production data according to filtering criteria so as to obtain filtered production data corresponding to clear sky days. The filtering step 200 is implemented by the calculator 10 in interaction with the computer program product 12, that is to say is implemented by a computer.

Clear sky days are days for which the power produced is considered not to be strongly affected by environmental conditions (clouds, shadows) masking the photovoltaic element or dysfunction of the photovoltaic element.

The left graph of figure 3 shows an example of the power produced (DC power in this example for a fixed tilt installation) corresponding to a clear sky day, and the right graph shows an example of the power produced corresponding to a non-clear sky day.

According to the invention it is sufficient that the filtered production data are obtained only on the basis of the collected production timeseries. In other words, the filtered production data are obtained independently of weather data.

The filtering criteria enable to evaluate the production data day by day and to keep only the production data corresponding to a production assimilates as those of a clear sky day.

In what follows a procedure is proposed to identify clear sky days for various module configurations. In this preferred embodiment, the filtering criteria state that:

- for each day, the day is kept only if it satisfies a completeness condition. The completeness condition states that the number of timesteps that do not violate this constraint of the day is greater than a predetermined threshold T1. The threshold T1 is lower, preferably slightly lower, than the number of timesteps typically found during daytime. A timestep is considered as a useful timestep for a day when the power of said timestep is above a computed power corresponding to a percentile of the power of the day. The percentile is for example the $5^{th}$ percentile of the day, which may correspond to instances where the plane-of-array irradiance is very low or equal to zero.
- for each day, the day is kept only if it satisfies a production condition. The production condition states that the power produced in the day is above a predetermined threshold either T2A or T2B. The production condition is also useful to select only the clear sky days with similar power production, which may reduce the variability of the subsequent time-wise degradation rate calculation. Two examples of verifying the production condition are given in what follows:

    - *Based on a percentile.* In this case, a high percentile (e.g., $95^{th}$, $98^{th}$, $100^{th}$) of the power production in the day is selected and compared to a threshold T2A. T2A represents an acceptable maximum power production for a clear sky day (CSD) and can be chosen by inspecting the typical maximum power production of the entire dataset. If the percentile is below threshold T2A, the day does not satisfy the production condition. In particular, it may not correspond to a CSD or may correspond to a CSD where irradiance values are very low with respect to the entire dataset.
    - *Based on the area under the curve.* In this case, the area under the power production curve is calculated (for example using approximation methods). If the calculated area is below a threshold T2B, the day does not satisfy the production condition and is therefore not considered as being a CSD. Similar to T2A, threshold T2B is used to eliminate days with low power production. Preferably, the value of T2B remains above the average area of all days.

- for each day, the day is kept only if it satisfies a smoothness condition. The smoothness condition checks for a smooth evolution of the power production values, as sudden changes in the power production can indicate the passing of clouds, shadowing or malfunctions. This smoothness condition can be verified in the following ways:

    - Based on differences.

    - Based on a moving standard deviation.

Once a smoothness condition is selected, the number of timesteps that do not meet this smoothness condition is determined. If this number is equal or greater than a threshold T3, the day is not considered as a CSD. In this case, T3 represents the number of times that abrupt changes in power production data are allowed. T3 is preferably kept relatively small; for example, by only allowing a tolerance of timesteps equivalent to thirty minutes of operation or less (e.g., T3=2 when data are sampled at 15 min frequency).

The formulation of the proposed smoothness conditions in this work depends on the type of module arrangement and are explained in more detail in what follows.

### *Smoothness condition based on differences*

This procedure comprises three main steps:

1. Identify production peaks or flat sections (single peak for fixed-tilt, two peaks for vertical, flat section for axis tracking)
2. Calculate differences.
3. Apply condition.

The steps for each type of module configuration are described next.

### *Fixed tilt modules*

- Fixed tilt modules are defined as being either horizontally mounted, ie with a tilt angle of 0° or with a title angle higher than 0°. In that case, PV modules are placed in an E-W direction (or close), facing North in the Southern hemisphere and facing South in the Northern hemisphere.

They are typically mounted onto a fixed-tilt structure or a structure for which the tilt can be adjusted with a limited number of angles, in order to accommodate seasonal variations of the solar zenith angle

In this case, fixed-tilt modules should present a single peak of production during a CSD. Therefore, this method starts with the identification of the timestep $i\_max$ corresponding to the maximum power $P\_max$ (e.g., the 100th percentile). This will determine the sections where positive and negative differences are expected.

For each timestep $i$, the normalized differences between power, $P$, at time $i+1$ and time i are calculated:

$$P_{dif,i} = \frac{(P_{i+1} - P_i)}{P_{i+1}} \qquad \text{For } i \leq i_{max} \qquad \text{Eq. 1}$$

$$P_{dif,i} = \frac{(P_i - P_{i+1})}{P_i} \qquad \text{For } i \geq i_{max} \qquad \text{Eq. 2}$$

Using these formulations, the differences are expected to remain positive in a CSD. However, a tolerance T3A is allowed to consider the effect of noise and errors in the measurements. Thus, the number of timesteps outside this tolerance is obtained using the condition below:

$$P_{dif,i} < T3A \qquad \text{for all } i, \text{ for } T3A{<}0 \qquad \text{Eq. 3}$$

This condition penalizes those timesteps that do not follow the expected direction of change in the power production. For example, a situation in which $P_i > P_{i+1}$ for $i \leq i_{max}$. The value for T3A is preferably equal to -0.05.

If the number of timesteps that do not meet the smoothness condition is above a threshold T3, it means that the evolution of the points is not smooth enough to be considered a CSD.

### *Vertically mounted modules*

Vertically mounted modules are mounted with a tilt angle of 90° and placed in a S-N direction.

For vertically mounted modules, two peaks of production are typically expected during a CSD. For this reason, the first step is to identify the locations of these two peaks.

In this case, the timestep corresponding to the maximum power production (e.g., the 100th percentile) is identified. This indicates the highest peak of production.

Next, the second-highest peak of power production is determined. This second peak should be at least two hours away from the highest peak (heuristic rule). For this purpose, the timesteps located two hours away from the highest peak are searched, and the maximum power value is identified. The peak occurring earlier in the day is identified as *P_max1* (*i=i_max1*), the peak occurring later is *P_max2* (*i=i_max2*).

Then, the minimum power production value between *i_max1* and *i_max2* is identified. This minimum, $i_{min}$, will dictate how the differences in power production are calculated:

$$\text{Eq. 1} \qquad \text{For } i \leq i_{max,1} \text{ and } i_{min} \leq i \leq i_{max,2}$$

$$\text{Eq. 2} \qquad \text{For } i_{max,1} \geq i \geq i_{min} \text{ and } i \geq i_{max,2}$$

Then, Eq. 3 is applied in the same manner as for the fixed-tilt case. If the number of timesteps that do not meet this smoothness condition is above a threshold T3, it means that the evolution of the points is not smooth enough to be considered a CSD.

### *Modules with axis trackers*

Module with axis trackers are defined as being mounted on a moving structure. The structure is moved by a "tracker" that follows the path of the sun to maximize power production. A single-axis tracker moves the panels on one axis of movement, typically aligned with north and south. A dual-axis tracker allows the panels to move on two axes, aligned both north-south and east-west.

For modules with axis trackers, the power production is characterized by a steeper increase in production, followed by a period of flatter power production, and ending with a steeper decrease in power production, compared to fixed-tilt modules.

In this case, the first step is to identify the section with flat power production. To achieve this, the power measurements above a high percentile (recommendation is the 90th percentile) are identified. The first timestep is identified as *i_at1* and the last timestep as *i_at2*. These timesteps will dictate how the differences in power production are calculated:

$$\text{Eq. 1} \qquad \text{For } i \leq i_{at,1}$$

$$\text{Eq. 2} \qquad \text{For } i \geq i_{at,2}$$

And,

$$P_{dif,i} = \left| \frac{(P_i - P_{i+1})}{P_i} \right| \qquad \text{For } i_{at,1} \leq i \leq i_{at,2} \qquad\qquad \text{Eq. 4}$$

Then, Eq. 3 is applied to Eq. 1, Eq. 2 and Eq. 4. Similar to the fixed-tilt and vertical arrangements, Eq. 3 is used to identify the timesteps that do not meet the smoothness condition. If the number of timesteps that do not meet the condition is above a threshold T3, it means that the evolution of the points is not smooth enough to be considered a CSD.

### *Smoothness condition based on a moving standard deviation*

In this case, a moving standard deviation is calculated using a pre-defined time window. The time window is chosen based on the sampling frequency. It is recommended to select a time window that:

- comprises at least six timesteps. This is particularly important for data sampled at or above a 15 min frequency. For example, for a normal population size of 32 (8 hours of operation sampled at 15 min frequency), a confidence level of 70%, and a 20% error, the sample size (i.e., the number of timesteps in a window) should be six.

- comprises at least 30 min of operation, as this gives enough time to include the passing of clouds.

Then, this method counts the number of timesteps above a selected standard deviation T3B. If this number of timesteps is above a threshold T3, this means that there is significant variance in the power production, which does not correspond to a CSD.

In the above example, the clear sky days are days satisfying the completeness condition, the production condition and the smoothness condition.

In another example, the filtering criteria deal with one or two of these conditions, but not necessarily the three of them. In other words, the filtering criteria states that for each day, the day is kept if it satisfies the completeness condition and/or the production condition and/or the smoothness condition.

The determination method comprises a step 300 for determining a degradation rate for the photovoltaic element on the basis of the filtered production data. The determination step 300 is implemented by the calculator 10 in interaction with the computer program product 12, that is to say is implemented by a computer.

### Method 1: Degradation rate based on production data

In a first example of embodiment, the determination step 300 comprises, for each photovoltaic element, the sum of the production values corresponding to each clear sky day to obtain daily cumulative production values.

Then, the determination step 300 comprises the sum of the daily cumulative production values corresponding to a same subsection of time (month for example) to obtain aggregated production values.

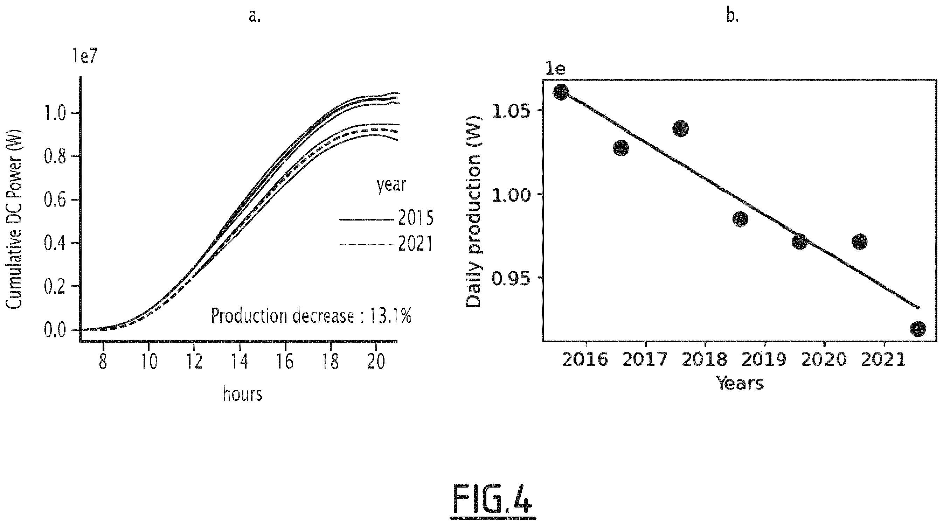

This is illustrated in Figure 4 (left graph), where the solid line in bold shows the average for August 2015, and the envelope shows the standard deviation of the aggregated data. The same month can be then compared across the years, as shown in Figure 4 left graph and in Figure 4 right graph. In Figure 4 left graph, there is an apparent loss of production of more than 13% after 6 years on the field.

Afterwards, the determination step 300 comprises the comparison of the aggregated production values corresponding to common subsections of time over the different years so as to obtain the degradation rate for the photovoltaic element.

Preferably, the comparison of the aggregated production values comprise for each subsection of time satisfying a statistical criterion, the comparison of the aggregated production values corresponding to all the years of the timeseries so as to obtain a specific degradation rate for said subsection of time. For example, the comparison of the aggregated production values is based on a linear regression, the specific degradation rate being the slope of the linear regression. An example of such linear regression is shown on figure 4 (right graph).

Advantageously, the statistical criterion states that the sum of the clear sky days of the considered subsection of time is higher than a predefined threshold. That is, the subsection of time (i.e., month) is retained, if there are enough clear sky days to do the analysis (i.e., sum clear sky days is higher than a predefined threshold). For example, in December it is mostly cloudy, so maybe just one or two days of clear sky are found, which is not useful. Therefore, December (for all years) is discarded from the analysis.

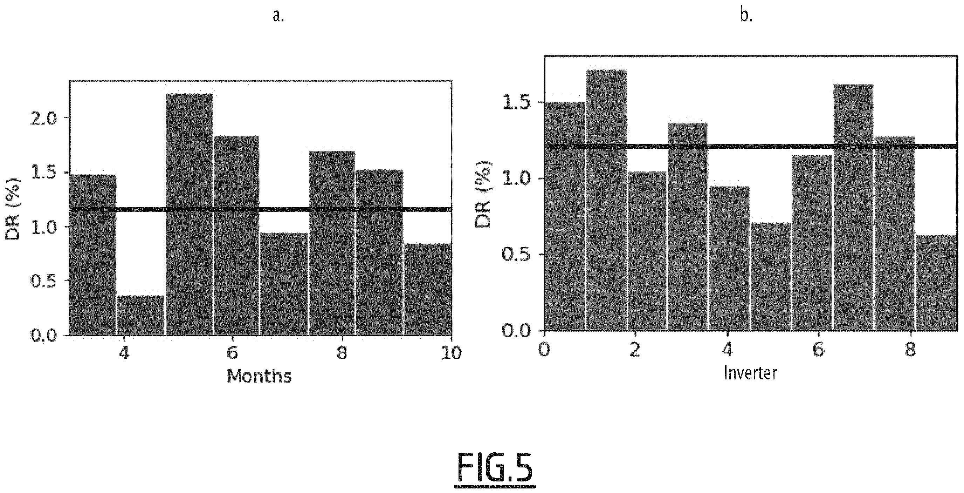

In addition, the comparison of the aggregated production comprises the average of all the specific degradation rates to obtain the degradation rate for the photovoltaic element. Results for a photovoltaic element are presented as a bold line in Figure 5 (left).

Hence, in an implementation, the first example corresponds to a monthly aggregation, and yearly evaluation (weather-independent). This implementation uses production data from deemed clear sky days, aggregates them monthly, and compares the decrease in production across years for each month.

This first embodiment, whilst it assumes that weather conditions are similar for clear-sky days in the same month over the years, has the following advantages:

- Is applicable to every PV system as it requires only the production data; i.e., it does not need weather data.
- It can identify differences in degradation rates when comparing individual photovoltaic element. Therefore, it can highlight photovoltaic elements with anomalous high degradation rates.

### Method 2: Degradation rate on the basis of collected weather data

In a second example of embodiment, the collecting step 100 also comprises collecting weather data (irradiance, temperature) corresponding to the collected production timeseries. The determination step 300 comprises determining a performance ratio (for example over a year) for each clear sky day on the basis of the production timeseries and of the weather data. The degradation rate of the photovoltaic element is obtained on the basis of the determined performance ratio, preferably by performing a linear regression on the said subsection of time (daily, monthly, etc.) performance ratio values, the degradation rate for the photovoltaic element being the slope of the linear regression.

The Performance Ratio (PR) is a metric used to measure the performance of photovoltaic systems. PR is the ratio between the actual and theoretically possible energy outputs and can be corrected to consider the effects of cell temperature in the module performance ($PR_{corr}$), as shown in the equation hereinafter:

$$PR_{corr} = \frac{\sum_i EN_i}{\sum_i P_{STC}\left(\frac{G_{POA\_i}}{G_{STC}}\right)\left(1 - \frac{\delta}{100}\left(T_{cell\_typ\_avg} - T_{cell\_i}\right)\right)} \qquad \text{Eq. 5}$$

Where:

- $PR_{corr}$ is the temperature-corrected performance ratio (unitless),
- $EN$ is the measured electrical generation (kW),
- $P_{STC}$ is the summation of installed modules' power rating from flash test data (kW),
- $G_{POA}$ is the measured plane of array (POA) irradiance (kW/m2),
- $i$ is a given point in time,
- $G_{STC}$ is the irradiance at standard test conditions (STC) (1,000 W/m2),
- $T_{cell}$ is the cell temperature computed from measured meteorological data (°C),
- $T_{cell\_typ\_avg}$ is the average cell temperature (°C), and
- $\delta$ is the temperature coefficient for power (%/°C, negative in sign) that corresponds to the installed modules.

It should be noted that optionally the determination step 300 implements the first example and the second example of embodiments.

Preferably, the collecting step 100, the filtering step 200 and the determination step 300 are repeated for all the photovoltaic elements of the photovoltaic installation, and the method comprises also a step 400 of averaging the degradation rates of all the photovoltaic elements to obtain an overall degradation rate for the photovoltaic installation. The averaging step 400 is implemented by the calculator 10 in interaction with the computer program product 12, that is to say is implemented by a computer.

Preferably, the determination method also comprises a step of implementing an action on the photovoltaic installation depending on the determined degradation rate(s). For example, when the degradation rate(s) is/are above a given degradation rate, a maintenance action or a replacement action is planned on the photovoltaic installation.

Hence, the above method enables to estimate a degradation rate relative to a photovoltaic installation without necessarily using ambient temperature data or irradiance data.

In particular, the use of clear sky days present multiple advantages:

- Each day has a comparable number of datapoints, daily aggregation become more robust.
- It does not remove production at low irradiance, which can give information on specific degradation modes.

The person skilled in the art will understand that the embodiments and variants described above can be combined to form new embodiments provided that they are technically compatible.

**Claims**

1. A method for determining at least a degradation rate relative to a photovoltaic installation comprising several photovoltaic elements, the method being implemented by a computer and comprising the following steps:

   - collecting production data for a photovoltaic element of the photovoltaic installation, the production data comprising a plurality of production timeseries extending over different periods of time divided in days, the production timeseries being obtained through measurements,
   - filtering the production data according to filtering criteria so as to obtain filtered production data corresponding to clear sky days, clear sky days being days for which the power produced is considered not to be affected by environmental conditions masking the photovoltaic element or dysfunction of the photovoltaic element, and
   - determining a degradation rate for the photovoltaic element on the basis of the filtered production data.

2. A method according to claim 1, wherein the photovoltaic elements are inverters or groups of inverters connected to one or a plurality of photovoltaic panels, the production timeseries being relative to the power production of the corresponding photovoltaic element.

3. A method according to claim 1 or 2, wherein the filtered production data are obtained only on the basis of the collected production timeseries.

4. A method according to any one of claims 1 to 3, wherein the filtering criteria enable to evaluate the production data day by day and to keep only the production data corresponding to a production considered as being those of a clear sky day.

5. A method according to any one of claims 1 to 4, wherein the filtering criteria state that:

- for each day, the day is kept only if it satisfies a completeness condition, the completeness condition stating that the number of useful timesteps of the day is greater than a predetermined threshold (T1), a useful timestep for a day being a timestep whose power is above a computed power corresponding to a percentile of the power of the day, and/or
- for each day, the day is kept only if it satisfies a production condition, the production condition stating that the power produced in the day is above a predetermined threshold (T2A ; T2B), and/or
- for each day, the day is kept only if the number of timesteps of said day satisfying a smoothness condition is above a predetermined threshold (T3), the smoothness condition checking for a smooth evolution of the power production values.

6. A method according to claim 5, wherein the smoothness condition is evaluated for each timestep of the day, either by calculating power differences for said timestep or by calculating a moving standard deviation for said timestep.

7. A method according to any one of claims 1 to 6, wherein the plurality of timeseries correspond to different years and comprise a common period of time over the different years, the common period of time being divided in subsections of time, the determination step comprising:

- the sum of the production values corresponding to each clear sky day to obtain daily cumulative production values,
- the sum of the daily cumulative production values corresponding to a same subsection of time to obtain aggregated production values, and
- the comparison of the aggregated production values corresponding to common subsections of time over the different years so as to obtain the degradation rate for the photovoltaic element.

8. A method according to claim 7, wherein the comparison of the aggregated production values comprises:

- for each subsection of time satisfying a statistical criterion, the comparison of the aggregated production values corresponding to all the years of the timeseries so as to obtain a specific degradation rate for said subsection of time, and
- the average of all the specific degradation rates to obtain the degradation rate for the photovoltaic element.

9. A method according to claim 8, wherein the comparison of the aggregated production values is based on a linear regression, the specific degradation rate being the slope of the linear regression.

10. A method according to claim 8 or 9, wherein the statistical criterion states that the sum of the clear sky days of the considered subsection of time is higher than a predefined threshold.

11. A method according to any one of claims 1 to 10, wherein the collecting step, the filtering step and the determination step are repeated for all the photovoltaic elements of the photovoltaic installation, and the method comprises also a step of averaging the degradation rates of all the photovoltaic elements to obtain an overall degradation rate for the photovoltaic installation.

12. A method according to any one of claims 1 to 11, wherein the collecting step also comprises collecting weather data corresponding to the collected production timeseries, the determination step comprising determining a performance ratio for each clear sky day on the basis of the production timeseries and of the weather data, the degradation rate of the photovoltaic element being obtained on the basis of the determined performance ratio, preferably by performing a linear regression, the degradation rate for the photovoltaic element being the slope of the linear regression.

13. A method according to any one of claims 1 to 12, wherein the collected data are data that have previously been processed so as to eliminate part of the collected data comprising a number of missing values above a given threshold and/or abnormal values, the abnormal values corresponding to the following values:

- values higher than a given threshold,
- values constant over a long period of time, and
- values corresponding to unrealistic distributions.

14. Computer program product comprising a computer readable medium, having thereon a computer program comprising program instructions, the computer program being loadable into a data-processing unit and causing execution of a method according to any one of claims 1 to 13 when the computer program is run by the data-processing unit.

**FIG.1**

```
┌─────────────────────────────────┐
│              100                │
│              ───                │
└─────────────────────────────────┘
                 │
                 ▼
┌─────────────────────────────────┐
│              200                │
│              ───                │
└─────────────────────────────────┘
                 │
                 ▼
┌─────────────────────────────────┐
│              300                │
│              ───                │
└─────────────────────────────────┘
                 │
                 ▼
┌─────────────────────────────────┐
│              400                │
│              ───                │
└─────────────────────────────────┘
```

# FIG.2

FIG.3

FIG.4

a.

b.

## FIG.5

Europäisches
Patentamt

European
Patent Office

Office européen
des brevets

# EUROPEAN SEARCH REPORT

Application Number

**EP 23 30 5776**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/207591 A1 (RINALDI PAOLO [IT]) 31 December 2014 (2014-12-31) * page 1, line 5 – page 12, line 3; claims 1-9 * | 1-14 | INV. H02S50/00 H02S50/10 |
| A | JONES C BIRK ET AL: "IEC 61215 Qualification Tests vs Outdoor Performance using Module Level In Situ I-V Curve Tracing Devices", 2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC), IEEE, 10 June 2018 (2018-06-10), pages 1286-1291, XP033456796, DOI: 10.1109/PVSC.2018.8548222 [retrieved on 2018-11-26] * page 1286 – page 1291 * | 1-14 | |

**TECHNICAL FIELDS SEARCHED (IPC)**

H02S

The present search report has been drawn up for all claims

| Place of search | Date of completion of the search | Examiner |
|---|---|---|
| The Hague | 2 January 2024 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 465 532 A1

## ANNEX TO THE EUROPEAN SEARCH REPORT
## ON EUROPEAN PATENT APPLICATION NO.

EP 23 30 5776

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2024

| Patent document cited in search report | Publication date | Patent family member(s) | Publication date |
|---|---|---|---|
| WO 2014207591 A1 | 31-12-2014 | NONE | |

For more details about this annex : see Official Journal of the European Patent Office, No. 12/82

EPO FORM P0459

18